# EUROPEAN PATENT APPLICATION

(11) **EP 4 155 884 A1**
(43) Date of publication of application: **29.03.2023**
(21) Application number: 21809471.2
(22) Date of filing: 12.05.2021
(51) Int. Cl.: G06F 3/0346, G06F 3/038

(54) **VIEWPOINT DETECTING DEVICE, AND DISPLAY DEVICE**

(30) Priority: 20.05.2020 JP 2020088397
(71) Applicant: Kyocera Corporation, Kyoto-shi, Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP); HASHIMOTO, Sunao, Kyoto-shi, Kyoto 612-8501 (JP)
(74) Representative: TBK
(86) International application number: PCT/JP2021/018011
(87) International publication number: WO 2021/235287

(57) **Abstract**

A viewpoint detector includes an imager that captures an image of an eye of a user and outputs the captured image, and a controller that detects a viewpoint of the user based on the captured image. The controller detects a position of the viewpoint from the captured image, and corrects the detected position of the viewpoint to a corrected viewpoint position with a conversion table.

## Description

### TECHNICAL FIELD

The present disclosure relates to a viewpoint detector and a display device.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2019-15823

### SUMMARY

In an aspect of the present disclosure, a viewpoint detector includes an imager that captures an image of an eye of a user and outputs the captured image, and a controller that detects a viewpoint of the user based on the captured image. The controller detects a position of the viewpoint from the captured image, and corrects the detected position of the viewpoint to a corrected viewpoint position with a conversion table.

In another aspect of the present disclosure, a display device includes the viewpoint detector, a housing accommodating the imager and including an eye box being placeable on the user, and a display accommodated in the housing to display the captured image. The imager captures an image of viewpoints of two eyes of the user with the housing placed on the user.

### BRIEF DESCRIPTION OF THE DRAWINGS

The objects, features, and advantages of the present disclosure will become more apparent from the following detailed description and the drawings.
FIG. 1 is a diagram of a movable body incorporating a three-dimensional (3D) projection system and a 3D display device including a gaze detector according to one embodiment of the present disclosure.
FIG. 2 is a schematic diagram of the 3D display device in FIG. 1.
FIG. 3 is a plan view of a display surface illustrating its example structure.
FIG. 4 is a plan view of a barrier illustrating its example structure.
FIG. 5 is a schematic diagram describing the relationship between the eyes of a user, a display, and the barrier.
FIG. 6 is a diagram of a movable body incorporating a 3D projection system and a 3D display device including a gaze detector according to another embodiment of the present disclosure.

### DESCRIPTION OF EMBODIMENTS

In the structure that forms the basis of a viewpoint detector and a display device according to one or more embodiments of the present disclosure, a controller obtains information about the positions of the eyes of a user, such as a driver, of a movable body, and dynamically controls a parallax barrier based on the information about the eye positions obtained by the controller to reduce distortion of a display image.

A light-emitting device according to one or more embodiments of the present disclosure will now be described with reference to the accompanying drawings. The drawings used herein are schematic.

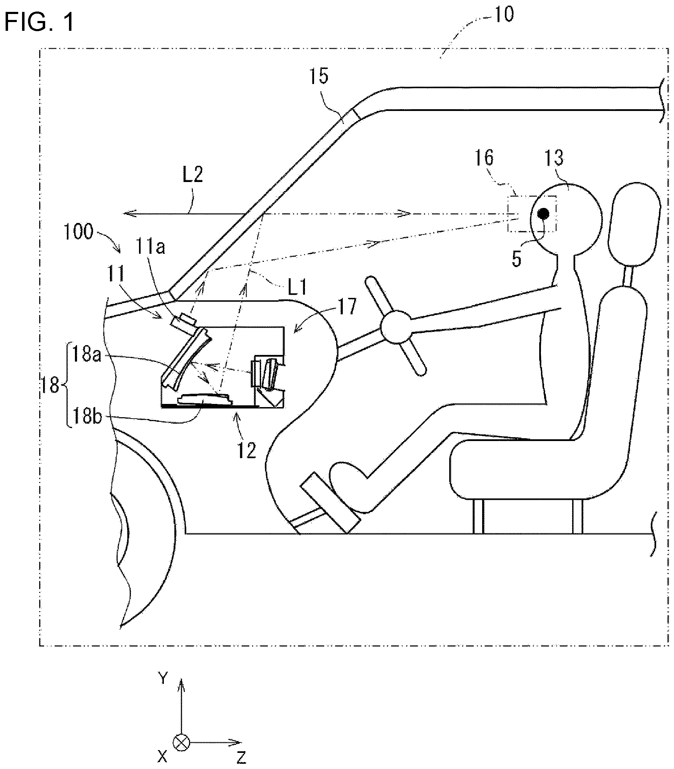

FIG. 1 is a diagram of the movable body incorporating a three-dimensional (3D) projection system and a 3D display device including a gaze detector according to one embodiment of the present disclosure. In the present embodiment, a movable body 10 includes a 3D projection system 100 and an optical member 15. The 3D projection system 100 may include a 3D display device 12. The movable body 10 incorporates the 3D projection system 100 and the 3D display device 12.

The 3D display device 12 may be mounted at any position inside or outside the movable body 10, and may be mounted, for example, inside a dashboard of the movable body 10. The 3D display device 12 emits image light toward the optical member 15.

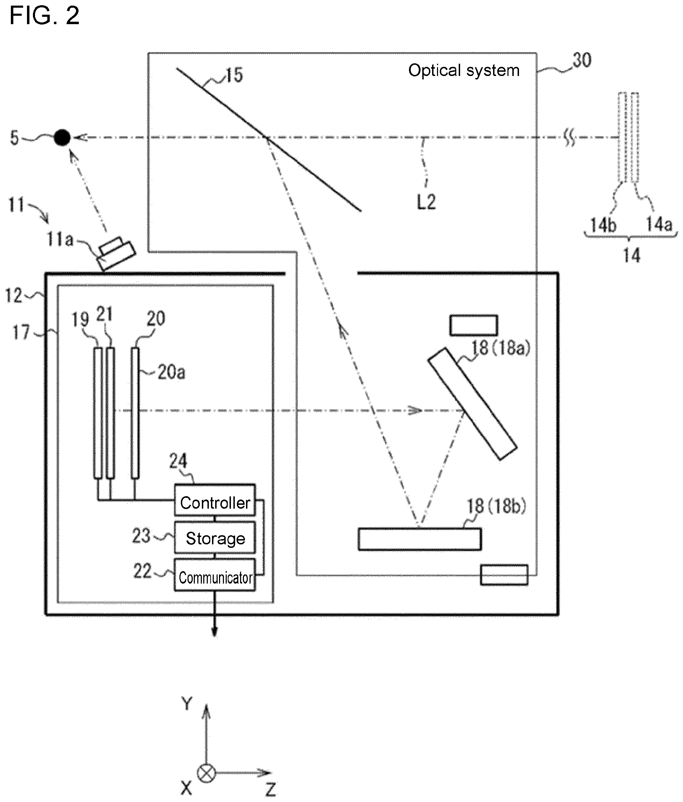

The optical member 15 reflects image light emitted from the 3D display device 12. The image light reflected from the optical member 15 reaches an eye box 16. The eye box 16 is a region defined in real space in which eyes 5 of a user 13 are expected to be located based on, for example, the body shape, posture, and changes in the posture of the user 13. The eye box 16 may be defined as a region of any shape, and may be planar or three-dimensional. An arrow L1 in FIG. 1 indicates a path traveled by at least a part of image light emitted from the 3D display device 12 to reach the eye box 16. With the eyes 5 of the user 13 located in the eye box 16 receiving image light, the user 13 can view a virtual image 14 illustrated in FIG. 2 (described later).

FIG. 2 is a schematic diagram of the 3D display device in FIG. 1. The virtual image 14 is on an extension L2 extending frontward from the path extending from the point of reflection of the optical member 15 to the eyes 5. The 3D display device 12 functions as a head-up display (HUD) that allows the user 13 to view the virtual image 14.

The optical member 15 may include, for example, a windshield or a combiner. In the present embodiment, the optical member 15 is a windshield. In FIGs. 1 and 2, the direction in which the eyes 5 of the user 13 are aligned corresponds to X-direction, the vertical direction corresponds to Y-direction, and the direction orthogonal to X-direction and Y-direction corresponds to the Z-direction.

In one or more embodiments of the present disclosure, examples of the movable body include a vehicle, a vessel, and an aircraft. Examples of the vehicle include an automobile, an industrial vehicle, a railroad vehicle, a community vehicle, and a fixed-wing aircraft traveling on a runway. Examples of the automobile include a passenger vehicle, a truck, a bus, a motorcycle, and a trolley bus. Examples of the industrial vehicle include an industrial vehicle for agriculture and an industrial vehicle for construction. Examples of the industrial vehicle include a forklift and a golf cart. Examples of the industrial vehicle for agriculture include a tractor, a cultivator, a transplanter, a binder, a combine, and a lawn mower. Examples of the industrial vehicle for construction include a bulldozer, a scraper, a power shovel, a crane vehicle, a dump truck, and a road roller. Examples of the vehicle may include man-powered vehicles. The classification of the vehicle is not limited to the above examples. For example, the automobile may include an industrial vehicle traveling on a road, and one type of vehicle may fall within multiple classes. Examples of the vessel include a jet ski, a boat, and a tanker, and examples of the aircraft include a fixed-wing aircraft and a rotary-wing aircraft.

The 3D projection system 100 may further include a detector 11 that detects the positions of the eyes 5 of the user 13. The detector 11 detects the positions of the eyes 5 of the user 13 and outputs the detected positions of the eyes 5 to the 3D display device 12. The gaze detector includes the detector 11. The 3D display device 12 controls an image to be projected based on the positions of the eyes 5 of the user 13 detected by the detector 11. The detector 11 may be at any position inside or outside the movable body 10. For example, the detector 11 may be inside the dashboard in the movable body 10. The detector 11 may output, to the 3D display device 12, information indicating the positions of the eyes 5, for example, with wires, wirelessly, or through a controller area network (CAN).

The detector 11 includes an imaging device 11a. The imaging device 11a may be implemented by, for example, a charge-coupled device (CCD) image sensor or a complementary metal-oxide semiconductor (CMOS) image sensor. The imaging device 11a has a preset imaging range to include the face of the user 13. The imaging range may include the eye box 16 to be placed at the head of the user 13. The user 13 may be, for example, the driver of the movable body 10. The detector 11 detects the positions of the two eyes 5 of the user 13 in real space based on a captured image captured with the imaging device 11a. The detector 11 may not include the imaging device 11a but may be connected to the imaging device 11a as an external device. The detector 11 may include an input terminal for receiving a signal from the imaging device. In this case, the imaging device may be directly connected to the input terminal. The detector 11 may be indirectly connected to the input terminal with a shared network. The detector 11 may detect the positions of the eyes 5 of the user 13 based on an image signal received through the input terminal.

The detector 11 may include, for example, a sensor. The sensor may be, for example, an ultrasonic sensor or an optical sensor. The detector 11 may detect the position of the head of the user 13 with the sensor, and detect the positions of the eyes 5 of the user 13 based on the position of the head. The detector 11 may use two or more sensors to detect the positions of the eyes 5 of the user 13 as coordinates in 3D space.

As illustrated in FIG. 2, the 3D display device 12 includes a 3D display device 17 and an optical element 18. The 3D display device 12 is also referred to as an image display module. The 3D display device 17 includes a backlight 19, a display 20 including a display surface 20a, a barrier 21, and a controller 24. The 3D display device 17 may further include a communicator 22. The 3D display device 17 may further include a storage 23.

The optical element 18 may include a first mirror 18a and a second mirror 18b. At least either the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The dot-dash arrow in FIG. 2 indicates a path traveled by at least a part of image light emitted from the 3D display device 17 to be reflected from the first mirror 18a and the second mirror 18b and then exit the 3D display device 12. The image light that has exited the 3D display device 12 reaches the optical member 15, is reflected from the optical member 15, and then reaches the eyes 5 of the user 13. This allows the user 13 to view the virtual image 14 displayed by the 3D display device 17.

The optical element 18 and the optical member 15 allow image light emitted from the 3D display device 17 to reach the eyes 5 of the user 13. The optical element 18 and the optical member 15 may form an optical system 30. In other words, the optical system 30 includes the optical element 18 and the optical member 15. The optical system 30 allows image light emitted from the 3D display device 17 to travel along the optical path indicated by the dot-dash line and reach the eyes 5 of the user 13. The optical system 30 may control the traveling direction of image light to magnify or reduce an image viewable by the user 13. The optical system 30 may control the traveling direction of image light to deform an image viewable by the user 13 based on a predetermined matrix.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may be one element or may include three or more elements, instead of two elements. The optical element 18 may include a lens instead of a mirror. The lens may be a concave lens or a convex lens. The lens may be at least partially spherical or aspherical.

The backlight 19 is more away from the user 13 than the display 20 and the barrier 21 are along the optical path. The backlight 19 emits light toward the barrier 21 and the display 20. At least a part of light emitted by the backlight 19 travels along the optical path indicated by the dot-dash line and reaches the eyes 5 of the user 13. The backlight 19 may include a light-emitting diode (LED) or a light emitter such as an organic electroluminescent (EL) element and an inorganic EL element. The backlight 19 may have any structure that allows control of the light intensity and the light intensity distribution.

The display 20 may include a display panel. The display 20 may be, for example, a liquid-crystal device such as a liquid-crystal display (LCD). In the present embodiment, the display 20 may include a transmissive LCD display panel. The display 20 is not limited to this, and may include any of various display panels.

The display 20 includes multiple pixels and controls the transmittance of light from the backlight 19 incident on each pixel to emit image light that then reaches the eyes 5 of the user 13. The user 13 views the virtual image 14 formed by image light emitted from each pixel in the display 20.

The barrier 21 defines the traveling direction of incident light. With the barrier 21 closer to the backlight 19 than to the display 20, light emitted from the backlight 19 enters the barrier 21 and then enters the display 20. In this case, the barrier 21 blocks or attenuates a part of light emitted from the backlight 19 and transmits another part of the light to the display 20. The display 20 emits incident light traveling in a direction defined by the barrier 21 as image light traveling in the same direction. With the display 20 closer to the backlight 19 than to the barrier 21, light emitted from the backlight 19 enters the display 20 and then enters the barrier 21. In this case, the barrier 21 blocks or attenuates a part of image light emitted from the display 20 and transmits another part of the image light to the eyes 5 of the user 13.

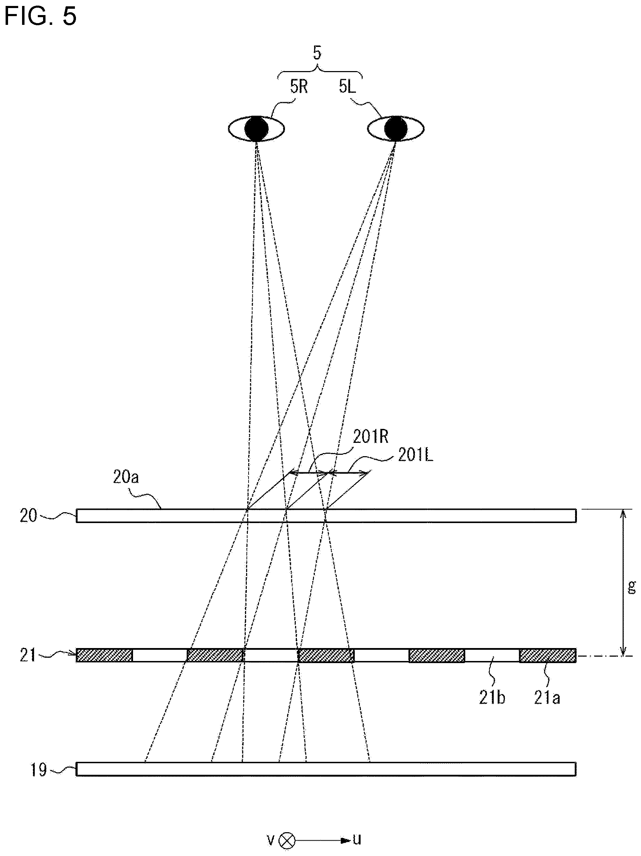

Irrespective of whether the display 20 or the barrier 21 is closer to the user 13, the barrier 21 can control the traveling direction of image light. The barrier 21 allows a part of image light emitted from the display 20 to reach one of a left eye 5L and a right eye 5R (refer to FIG. 5) of the user 13, and another part of the image light to reach the other one of the left eye 5L and the right eye 5R of the user 13. In other words, the barrier 21 directs at least a part of image light in a direction toward the left eye 5L of the user 13 and in a direction toward the right eye 5R of the user 13. The left eye 5L is also referred to as a first eye, and the right eye 5R as a second eye. In the present embodiment, the barrier 21 is located between the backlight 19 and the display 20. Light emitted from the backlight 19 first enters the barrier 21 and then enters the display 20.

The barrier 21 defines the traveling direction of image light to allow each of the left eye 5L and the right eye 5R of the user 13 to receive different image light. Each of the left eye 5L and the right eye 5R of the user 13 can thus view a different virtual image 14.

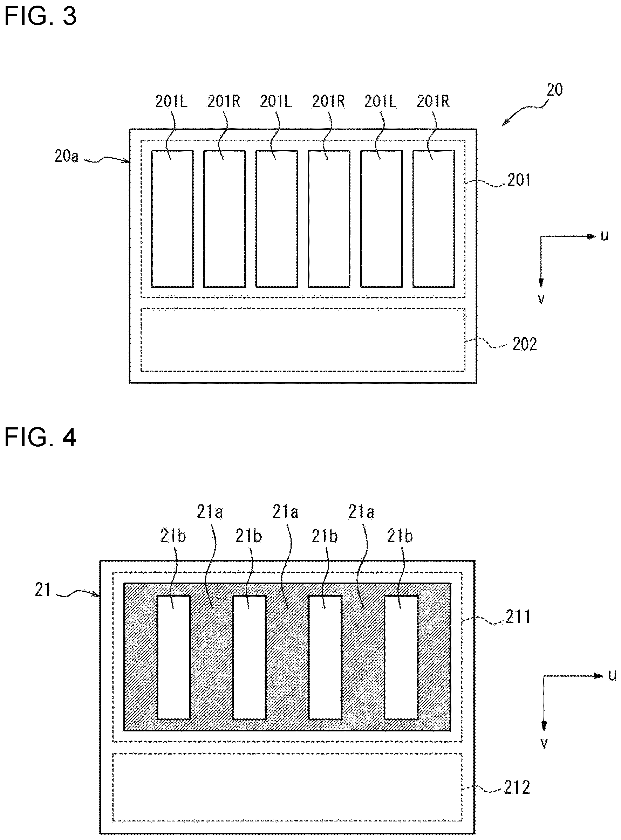

As illustrated in FIG. 3, the display 20 includes, on the display surface 20a, a first display area 201 and a second display area 202. The first display area 201 may include left-eye viewing areas 201L viewable by the left eye 5L of the user 13 and right-eye viewing areas 201R viewable by the right eye 5R of the user 13. The display 20 displays a parallax image including left-eye images viewable by the left eye 5L of the user 13 and right-eye images viewable by the right eye 5R of the user 13. The parallax image refers to an image projected to the left eye 5L and the right eye 5R of the user 13 to cause parallax between the two eyes of the user 13.

The display 20 displays left-eye images in the left-eye viewing areas 201L and right-eye images in the right-eye viewing areas 201R. The display 20 thus displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. The left-eye viewing areas 201L and the right-eye viewing areas 201R may thus be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 displays a planar image on the second display area 202. The planar image causes no parallax between the eyes 5 of the user 13 and is not viewed stereoscopically.

As illustrated in FIG. 4, the barrier 21 includes a first barrier area 211 and a second barrier area 212. The barrier 21 located closer to the user 13 than the display 20 controls the transmittance of image light emitted from the display 20. The first barrier area 211 corresponds to the first display area 201, and controls the transmittance of image light for a parallax image emitted from the first display area 201. The first barrier area 211 includes open portions 21b and light-blocking portions 21a. The open portions 21b transmit light entering the barrier 21 from the display 20. The open portions 21b may transmit light with a transmittance of a first predetermined value or greater. The first predetermined value may be, for example, 100% or a value close to 100%. The light-blocking portions 21a block light entering the barrier 21 from the display 20. The light-blocking portions 21a may transmit light with a transmittance of a second predetermined value or smaller. The second predetermined value may be, for example, 0% or a value close to 0%. The first predetermined value is greater than the second predetermined value.

The open portions 21b and the light-blocking portions 21a are arranged alternately in u-direction indicating the parallax direction. The boundaries between the open portions 21b and the light-blocking portions 21a may extend in v-direction orthogonal to the parallax direction as illustrated in FIG. 4, or in a direction inclined with respect to v-direction at a predetermined angle. In other words, the open portions 21b and the light-blocking portions 21a may be arranged alternately in a predetermined direction including a component in the parallax direction.

The shapes of the open portions 21b and the light-blocking portions 21a may be determined based on the shapes of the left-eye viewing areas 201L and the right-eye viewing areas 201R. Conversely, the shapes of the left-eye viewing areas 201L and the right-eye viewing areas 201R may be determined based on the shapes of the open portions 21b and the light-blocking portions 21a.

The second barrier area 212 corresponds to the second display area 202, and controls the transmittance of image light for a planar image emitted from the second display area 202.

In the present embodiment, the barrier 21 is more away from the user 13 than the display 20 is. The barrier 21 controls the transmittance of light directed from the backlight 19 to the display 20. Open portions 21b transmit light directed from the backlight 19 to the display 20. Light-blocking portions 21a block light directed from the backlight 19 to the display 20. This structure allows light entering the first display area 201 to travel in a predetermined direction. Thus, the barrier 21 can control a part of image light to reach the left eye 5L of the user 13, and another part of the image light to reach the right eye 5R of the user 13.

The barrier 21 may include a liquid crystal shutter. The liquid crystal shutter can control the transmittance of light in accordance with a voltage applied. The liquid crystal shutter may include multiple pixels and control the transmittance of light for each pixel. The liquid crystal shutter can form a portion with a high light transmittance or a portion with a low light transmittance in an intended shape. The open portions 21b in the barrier 21 including a liquid crystal shutter may have a transmittance of a first predetermined value or greater. The light-blocking portions 21a in the barrier 21 including a liquid crystal shutter may have a transmittance of a second predetermined value or less.

The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open portions 21b and the light-blocking portions 21a that can shift is also referred to as an active barrier.

The controller 24 controls the display 20. The controller 24 may control the barrier 21 that is an active barrier. The controller 24 may control the backlight 19. The controller 24 may obtain, from the detector 11, information about the positions of the eyes 5 of the user 13, and control the display 20, the barrier 21, or the backlight 19 based on the information.

The controller 24 may be, for example, a processor. The controller 24 may include one or more processors. The processors may include a general-purpose processor that reads a specific program and performs a specific function, and a processor dedicated to specific processing. The dedicated processor may include an application-specific integrated circuit (ASIC). The processors may include a programmable logic device (PLD). The PLD may include a field-programmable gate array (FPGA). The controller 24 may be either a system on a chip (SoC) or a system in a package (SiP) in which one or more processors cooperate with other components.

The communicator 22 may include an interface that can communicate with an external device. The external device may include, for example, the detector 11. The communicator 22 may obtain information from the detector 11 and output the information to the controller 24. The communication interface in the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the universal serial bus (USB) standard, or a connector used for an RCA terminal. The electric connector may include a connector used for an S terminal specified by EIAJ CP-121aA or a connector used for a D terminal specified by EIAJ RC-5237. The electric connector may include a connector complying with the High-Definition Multimedia Interface (HDMI, registered trademark) standard or a connector used for a coaxial cable including a British Naval Connector, also known as, for example, a Baby-series N Connector (BNC). The optical connector may include a connector complying with IEC 61754. The wireless communication device may include a wireless communication device complying with the Bluetooth (registered trademark) standard and a wireless communication device complying with other standards including IEEE 8021a. The wireless communication device may include at least one antenna.

The storage 23 may store various information sets or programs for causing the components of the 3D display device 17 to operate. The storage 23 may include, for example, a semiconductor memory. The storage 23 may function as a work memory for the controller 24. The controller 24 may include the storage 23.

As illustrated in FIG. 5, light emitted from the backlight 19 passes through the barrier 21 and the display 20 to reach the eyes 5 of the user 13. The broken lines indicate the paths traveled by light from the backlight 19 to reach the eyes 5. The light through the open portions 21b in the barrier 21 to reach the right eye 5R passes through the right-eye viewing areas 201R in the display 20. The light through the open portions 21b thus allows the right eye 5R to view the right-eye viewing areas 201R. The light through the open portions 21b in the barrier 21 to reach the left eye 5L passes through the left-eye viewing areas 201L in the display 20. The light through the open portions 21b thus allows the left eye 5L to view the left-eye viewing areas 201L.

The display 20 displays right-eye images in the right-eye viewing areas 201R and left-eye images in the left-eye viewing areas 201L. Thus, the barrier 21 allows image light for the left-eye images to reach the left eye 5L and image light for the right-eye images to reach the right eye 5R. The open portions 21b thus allow image light for the left-eye images to reach the left eye 5L of the user 13 and image light for the right-eye images to reach the right eye 5R of the user 13. The 3D display device 17 with this structure can project a parallax image to the two eyes of the user 13. The user 13 views the parallax image with the left eye 5L and the right eye 5R to view the image stereoscopically. A direction that causes parallax between the two eyes of the user 13 is also referred to as a parallax direction. The parallax direction corresponds to the direction in which the left eye 5L and the right eye 5R of the user 13 are located.

The user 13 having stereoscopic vision may lose stereoscopic vision when the left eye 5L receives image light for the right-eye images or when the right eye 5R receives image light for the left-eye images. A phenomenon in which the left eye 5L receives image light for the right-eye images or the right eye 5R receives image light for the left-eye images is also referred to as crosstalk. Crosstalk deteriorates the quality of a stereoscopic image provided to the user 13. The barrier 21 prevents image light for the left-eye images from reaching the right eye 5R and image light for the right-eye images from reaching the left eye 5L. The light-blocking portions 21a thus prevent image light for the left-eye images from reaching the right eye 5R of the user 13 and image light for the right-eye images from reaching the left eye 5L of the user 13. This structure allows the user 13 to view left-eye images with the left eye 5L alone and right-eye images with the right eye 5R alone. Crosstalk is thus less likely to occur.

Image light emitted from the display surface 20a of the display 20 at least partially passes through the open portions 21b in the barrier 21 and reaches the optical member 15 through the optical element 18. The image light is reflected from the optical member 15 and reaches the eyes 5 of the user 13. This allows the eyes 5 of the user 13 to view a first virtual image 14a located more away in the negative Z-direction than the optical member 15. The first virtual image 14a corresponds to the image appearing on the display surface 20a. The open portions 21b and the light-blocking portions 21a in the barrier 21 form a second virtual image 14b in front of the optical member 15 and more away toward the optical member 15 than the first virtual image 14a. As illustrated in FIG. 5, the user 13 can view a virtual image 14 with the display 20 appearing to be at the position of the first virtual image 14a and the barrier 21 appearing to be at the position of the second virtual image 14b.

The 3D display device 17 emits image light for the image appearing on the display surface 20a in a direction defined by the barrier 21. The optical element 18 reflects or refracts the image light to direct the light to the optical member 15. The optical member 15 reflects the image light to direct the light to the eyes 5 of the user 13. The image light entering the eyes 5 of the user 13 causes the user 13 to view a parallax image as a virtual image 14. The user 13 views the virtual image 14 stereoscopically. An image corresponding to the parallax image in the virtual image 14 is also referred to as a parallax virtual image. A parallax virtual image is a parallax image projected through the optical system 30. An image corresponding to the planar image in the virtual image 14 is also referred to as a planar virtual image. A planar virtual image is a planar image projected through the optical system 30.

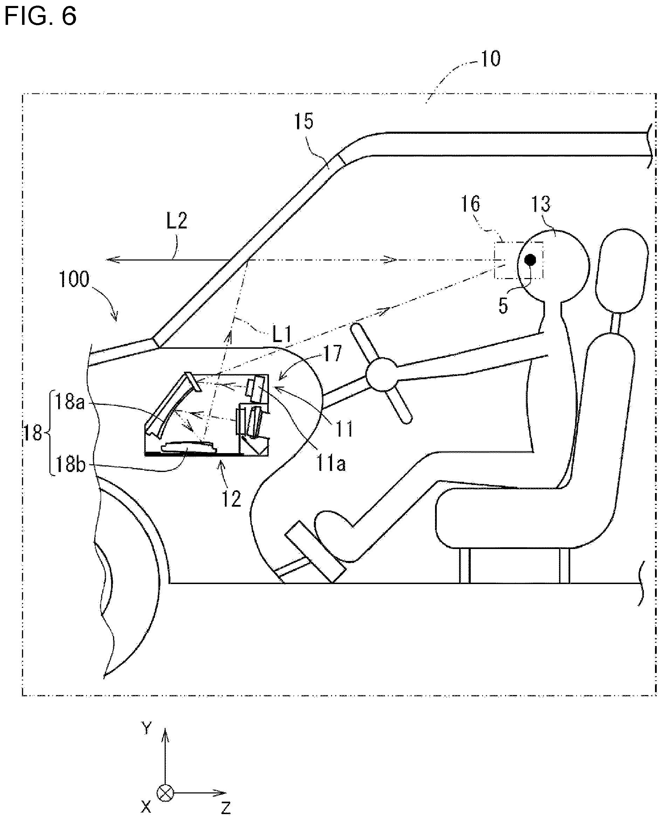

A parallax virtual image viewable by the user 13 is projected to the eyes 5 of the user 13 through the optical system 30. The optical system 30 may be to project an image input with incident image light by enlarging or reducing the image while maintaining the relative similarity of the image. However, the optical system 30 may not maintain the relative similarity between the input image and the image to be projected. Distortion may thus occur between a parallax image yet to be input into the optical system 30 and a parallax image (parallax virtual image) projected through the optical system 30. For example, as illustrated in FIG. 6, a virtual image 14 distorted to be enlarged in u-direction in the positive v-direction may result from projecting an image appearing on the rectangular display surface 20a to the eyes 5 of the user 13 through the optical system 30. The solid lines indicate the shape of the display surface 20a. The broken lines indicate the shape of the virtual image 14. The virtual image 14 may include a parallax virtual image and a planar virtual image. A parallax virtual image with greater distortion is more likely to cause crosstalk. Distortion of a planar virtual image is unrelated to crosstalk. Distortion of the virtual image 14 causes crosstalk to be more observable by the user 13. Distortion of a parallax virtual image is thus more likely to lower the quality of a stereoscopic image provided to the user 13 than distortion of a planar virtual image.

Eliminating all distortion in the optical system 30 is difficult. Changing the distribution of distortion in the optical system 30 is easier than eliminating the distortion. In the present embodiment, the optical system 30 in the 3D display device 12 is thus designed to allow a parallax image projected through the optical system 30 to have less distortion than a planar image projected through the optical system 30. The optical system 30 may thus have an area with distortion with a predetermined value or greater distributed to an area through which image light for a planar image passes, and may have an area with distortion with a value smaller than the predetermined value distributed to an area through which image light for a parallax image passes. For example, the optical system 30 may be designed to allow an area corresponding to the first display area 201 to have less distortion, and to allow an area corresponding to the second display area 202 to have greater distortion. This structure can improve the quality of a stereoscopic image provided to the user 13 through the optical system 30 with any distortion.

A parallax image may include right-eye images and left-eye images alternately arranged in the parallax direction. The display 20 displays, on the display surface 20a, right-eye images in the right-eye viewing areas 201R and left-eye images in the left-eye viewing areas 201L. A parallax image (parallax virtual image) projected through the optical system 30 having distortion in the parallax direction is more likely to cause right-eye images to be included in the left-eye viewing areas 201L and left-eye images to be included in the right-eye viewing areas 201R in the parallax image. In other words, distortion in the parallax direction easily causes crosstalk.

Distortion in the optical system 30 is represented by composition of a component of distortion in the parallax direction and a component of distortion in a direction intersecting with the parallax direction. Controlling the direction of distortion in the optical system 30 is easier than eliminating the distortion. The optical system 30 may thus be designed to allow distortion in the optical system 30 to include a component of distortion in the parallax direction less than a component of distortion in the direction intersecting with the parallax direction. This structure can improve the quality of a stereoscopic image provided to the user 13 through the optical system 30 with any distortion.

The optical system 30 may be a single concave mirror. A projection target object is projected with the concave mirror to form a virtual image 14 viewable by the user 13. The virtual image 14 has the magnification with the focal length f of the concave mirror. When the distance between the projection target object and the concave mirror is 0, or when the projection target object is on the concave mirror, the magnification of the virtual image 14 is 1x (same magnification). When the distance between the projection target object and the concave mirror is f, or when the projection target object is at the focal point of the concave mirror, the magnification of the virtual image 14 diverges to infinity. As the distance between the projection target object and the concave mirror approaches f, the magnification of the virtual image 14 increases, and also the rate of change in the magnification of the virtual image 14 with respect to the change in the distance increases.

In the present embodiment, the barrier 21 is more away from the optical system 30 than the display surface 20a. In other words, the distance between the barrier 21 and the optical system 30 is larger than the distance between the display surface 20a and the optical system 30. The distance between the display surface 20a and the optical system 30 is represented by D1.

The distance between the barrier 21 and the optical system 30 is represented by D2. Thus, D2 > D1. The magnification is A1 for the distance D1 between the projection target object and the concave mirror, and is A2 for the distance D2. Then, A2 > A1. In other words, the second virtual image 14b corresponding to the barrier 21 has a higher magnification than the first virtual image 14a corresponding to the display surface 20a. When the barrier 21 has the same area as the display surface 20a, the second virtual image 14b has a larger area than the first virtual image 14a.

The second virtual image 14b thus covers the first virtual image 14a. In the parallax virtual image viewable by the user 13, the barrier 21 covers an image appearing on the display surface 20a. When the barrier 21 fails to cover a part of the image appearing on the display surface 20a, the uncovered part causes crosstalk. The barrier 21 covers the image appearing on the display surface 20a to reduce the likelihood of crosstalk. This can improve the quality of a stereoscopic image provided to the user 13.

The optical system 30 represented by a single concave mirror projects the 3D display device 17 as a projection target object to form a virtual image 14. Distortion of the virtual image 14 changes depending on the distance between the projection target object and the optical system 30. For example, a virtual image 14 of a projection target object at a first distance from the optical system 30 has distortion different from distortion of a virtual image 14 of the projection target object at a second distance from the optical system 30. The optical system 30 can be designed to minimize the distortion of a virtual image 14 of the projection target object at a predetermined distance from the optical system 30.

The display surface 20a and the barrier 21 are located with a predetermined gap represented by reference numeral g in FIG. 5 between them. In other words, the distance between the display surface 20a and the optical system 30 differs from the distance between the barrier 21 and the optical system 30. In this case, distortion of the first virtual image 14a corresponding to the display surface 20a differs from distortion of the second virtual image 14b corresponding to the barrier 21. Distortion of the second virtual image 14b deforms the right-eye viewing areas 201R and the left-eye viewing areas 201L in the first virtual image 14a. The deformed right-eye viewing areas 201R and left-eye viewing areas 201L increase the likelihood that right-eye images are included in the left-eye viewing areas 201L and left-eye images are included in the right-eye viewing areas 201R. Distortion of the first virtual image 14a can be corrected by distorting the image appearing on the display 20 based on a matrix inversely transformed from a matrix representing the distortion in the optical system 30. In other words, distortion of the second virtual image 14b is more likely to cause crosstalk than distortion of the first virtual image 14a.

The optical system 30 may be designed to allow a virtual image for the barrier 21 to have less distortion than a virtual image for the display surface 20a. The 3D display device 17 may be positioned relative to the optical system 30 to allow a virtual image for the barrier 21 to have less distortion than a virtual image for the display surface 20a. In other words, the barrier 21 may be located to minimize the distortion in the optical system 30. This structure can improve the quality of a stereoscopic image provided to the user 13 through the optical system 30 with any distortion. The controller detects the viewpoint position from the captured image and corrects the detected viewpoint position to a corrected viewpoint position with conversion tables. The conversion tables include a distortion correction table for correction of distortion of the captured image. The conversion tables include an origin correction table for correction of the offset between the origin of the captured image and the origin of the display image corresponding to the captured image.

The structure according to the present disclosure is not limited to the structure described in the above embodiments, but may be changed or altered variously. For example, the functions of the components are reconfigurable unless any contradiction arises. Multiple components may be combined into a single unit or a single component may be divided into separate units.

The figures illustrating the configurations according to the present disclosure are schematic. The figures are not drawn to scale relative to the actual size of each component.

In the present disclosure, the first, the second, and others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller number identifiers.

In the present disclosure, X-axis, Y-axis, and Z-axis are used for ease of explanation and may be interchangeable with one another. The orthogonal coordinate system including X-axis, Y-axis, and Z-axis is used to describe the structures according to the present disclosure. The positional relationship between the components in the present disclosure is not limited to being orthogonal.

In another embodiment of the present disclosure, a detector 11 may be located in a housing for a 3D display device 12, as illustrated in FIG. 6. With the detector 11 at a different position, a controller 24 controls the operation of an optical member 15 based on the angle of incidence of the light path from an imaging device 11a to a light-reflective portion 15a on the rear of the optical member 15 to accurately detect the viewpoint of a user 13, and controls the image to be projected based on the detection to project a high-quality 3D image.

The present disclosure may be implemented in the following forms.

In one or more embodiments of the present disclosure, a viewpoint detector includes an imager that captures an image of an eye of a user and outputs the captured image, and a controller that detects a viewpoint of the user based on the captured image. The controller detects a position of the viewpoint from the captured image, and corrects the detected position of the viewpoint to a corrected viewpoint position with a conversion table.

In one or more embodiments of the present disclosure, a display device includes the viewpoint detector, a housing accommodating the imager and including an eye box being placeable on the user, and a display accommodated in the housing to display the captured image. The imager captures an image of viewpoints of two eyes of the user with the housing placed on the user.

In one or more embodiments of the present disclosure, the viewpoint detector and the display device further improve the quality of stereoscopic images provided to users.

Although embodiments of the present disclosure have been described in detail, the present disclosure is not limited to the embodiments described above, and may be changed or varied in various manners without departing from the spirit and scope of the present disclosure. The components described in the above embodiments may be entirely or partially combined as appropriate unless any contradiction arises.

### REFERENCE SIGNS

- 5: eye
- 5L: left eye
- 5R: right eye
- 10: movable body
- 12: three-dimensional (3D) display device (image display module)
- 13: user
- 14: virtual image
- 14a: first virtual image
- 14b: second virtual image
- 15: optical member
- 16: eye box
- 17: three-dimensional (3D) display device
- 18: optical element
- 18a: first mirror
- 18b: second mirror
- 19: backlight
- 20: display
- 20a: display surface
- 21: barrier
- 21a: light-blocking portion
- 21b: open portion
- 22: communicator
- 23: storage
- 24: controller
- 30: optical system
- 100: three-dimensional (3D) projection system
- 201: first display area
- 201L: left-eye viewing area
- 201R: right-eye viewing area
- 202: second display area
- 211: first barrier area
- 212: second barrier area

## Claims

1. A viewpoint detector, comprising:
an imager configured to capture an image of an eye of a user and output the captured image; and
a controller configured to detect a viewpoint of the user based on the captured image,
wherein the controller detects a position of the viewpoint from the captured image, and
corrects the detected position of the viewpoint to a corrected viewpoint position with a conversion table.

2. The viewpoint detector according to claim 1, wherein
the conversion table includes a distortion correction table for correction of distortion of the captured image.

3. The viewpoint detector according to claim 1, further comprising:
a display configured to display a display image,
wherein the conversion table includes an origin correction table for correction of an offset between an origin of the captured image and an origin of the display image corresponding to the captured image.

4. A display device, comprising:
the viewpoint detector according to any one of claims 1 to 3; and
a housing accommodating the imager, the housing including an eye box being placeable on the user,
wherein the housing accommodates the display, and
the imager captures an image of viewpoints of two eyes of the user with the housing placed on the user.
